# EUROPEAN PATENT APPLICATION

(11) **EP 4 451 424 A1**
(43) Date of publication of application: **23.10.2024**
(21) Application number: 22906512.3
(22) Date of filing: 12.12.2022
(51) Int. Cl.: H01M 10/613, H01M 10/615, B60H 1/00, B60L 58/26, B60L 58/27

(54) **ELECTRIC VEHICLE AND HEAT PUMP SYSTEM THEREOF**

(30) Priority: 16.12.2021 CN 202123172710 U
(71) Applicant: Beijing Chehejia Automobile Technology Co., Ltd., Beijing 101300 (CN)
(72) Inventor: DONG, Junqi, Beijing 101300 (CN)
(74) Representative: Maiwald GmbH
(86) International application number: PCT/CN2022/138430
(87) International publication number: WO 2023/109767

(57) **Abstract**

An electric vehicle and a heat pump system thereof comprise: a compressor, a battery cooling channel, an outdoor heat exchange channel, a cooling channel of an electric drive system and a heat exchange device. The battery cooling channel and the outdoor heat exchange channel are connected in series or in parallel between an inlet pipe and an outlet pipe of the compressor. A first heat sink is provided on the outdoor heat exchange channel, a second heat sink is provided on the cooling channel of the electric drive system, and the heat exchange device is connected between the outdoor heat exchange channel and the cooling channel of the electric drive system to exchange heat.

## Description

### CROSS-REFERENCE TO RELATED APPLICATION

This application is based on and claims priority to Chinese Patent Application No. 202123172710.7, filed on December 16, 2021, the entire content of which is incorporated herein by reference.

### FIELD

The present disclosure relates to the field of electric vehicles, and more particularly to an electric vehicle and a heat pump system thereof.

### BACKGROUND

The Battery, as the most important element in the electric vehicle, provides power and energy for driving of the vehicle. Therefore, the efficient and accurate thermal management of the battery is very important.

When the battery is fast charging, it needs a strong cooling capacity, which can quickly reduce the heat accumulation of the battery caused by the high-current charging, and hence improve the safety of the battery. At present, the battery is cooled with the liquid because the thermal capacity inertia of the liquid refrigerant (coolant) is relatively large. When cooling the battery, it is necessary to first cool all the liquid in the battery pack and the liquid in the pipe, and then the battery can be cooled by the liquid. As a result, the cooling rate of the battery cannot keep up with the demand, resulting in the rapid heating of the battery and limiting the fast-charging speed of the battery.

### SUMMARY

In order to solve the above technical problems or at least partially solve the above technical problems, the present disclosure provides a heat pump system of an electric vehicle.

An aspect of the present disclosure discloses a heat pump system of an electric vehicle, including: a compressor, a battery cooling passage, an outdoor heat exchange passage, an electric drive system cooling passage and a heat exchange device. The battery cooling passage and the outdoor heat exchange passage are connected in series or in parallel between an inlet pipe of the compressor and an outlet pipe of the compressor. A first heat sink is arranged on the outdoor heat exchange passage, a second heat sink is arranged on the electric drive system cooling passage, and the heat exchange device is connected between the outdoor heat exchange passage and the electric drive system cooling passage to exchange heat.

Optionally, a battery heat exchanger is arranged on the battery cooling passage, and a first intermediate heat exchanger is connected between an inlet pipe of the battery heat exchanger and an outlet pipe of the battery heat exchanger; a first throttle valve is arranged on the inlet pipe of the battery heat exchanger and between the first intermediate heat exchanger and the battery heat exchanger; and a pressure regulating valve is arranged on the outlet pipe of the battery heat exchanger and at a downstream end of the first intermediate heat exchanger.

Optionally, an indoor heat sink is arranged on the outlet pipe of the compressor.

Optionally, the heat pump system of the electric vehicle further includes an indoor refrigerating passage connected in parallel with the battery cooling passage.

Optionally, a second intermediate heat exchanger is connected between the inlet pipe of the compressor and the outdoor heat exchange passage.

Optionally, a second throttle valve is arranged on the outdoor heat exchange passage, and the second throttle valve is connected in parallel with a first valve body.

Optionally, the heat pump system of the electric vehicle further includes a valve assembly, and a short-out passage connected between an inlet pipe of the second heat sink and an outlet pipe of the second heat sink, and the valve assembly is configured to selectively communicate with the second heat sink or the short-out passage.

Optionally, an upstream end of the outdoor heat exchange passage is communicated with an upstream end of the battery cooling passage through a first connection passage, and a second valve body is arranged on the first connection passage; a downstream end of the outdoor heat exchange passage is communicated with the upstream end of the battery cooling passage through a second connection passage, and a third valve body is arranged on the second connection passage; and the downstream end of the outdoor heat exchange passage is communicated with the downstream end of the battery cooling passage through a third connection passage, and a fourth valve body is arranged on the third connection passage.

Optionally, the third valve body is a one-way valve conducting in a direction pointing towards the downstream end of the battery cooling passage.

Another aspect of the present disclosure discloses an electric vehicle, including the heat pump system of the electric vehicle as described above.

In the heat pump system of the electric vehicle, when the first heat sink dissipates the heat of the refrigerant in the outdoor heat exchange passage, part of the heat of the outdoor heat exchange passage is transferred to the electric drive system cooling passage through the heat exchange device, and then is dissipated through the second heat sink. Therefore, by utilizing the combined effect of the first heat sink and the second heat sink, the temperature of the refrigerant is reduced more greatly, and the refrigerating capacity of the system is improved.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solutions in embodiments of the present disclosure or in the related art, the drawings required to be used in the description of the embodiments or the related art will be briefly described below, and it is obvious for those skilled in the art that other drawings can be obtained according to these drawings without creative labors.
Fig. 1 is a schematic view of a heat pump system in a standard heating mode of an electric vehicle according to an embodiment of the present disclosure.
Fig. 2 is a schematic view of a heat pump system in a heating and dehumidification mode of an electric vehicle according to an embodiment of the present disclosure.
Fig. 3 is a schematic view of a heat pump system in a battery refrigerating and fast charging mode of an electric vehicle according to an embodiment of the present disclosure.

In the drawings, a solid line indicates that a pipe is conducted, and a dashed line indicates that a pipe is not conducted.

References signs:
1 compressor; 2 outlet pipe of compressor; 3 inlet pipe of compressor; 4 battery cooling passage; 5 outdoor heat exchange passage; 6 heat exchange device; 7 indoor refrigerating passage; 8 throttle component; 9 indoor evaporator; 10 battery heat exchanger; 11 indoor heat sink; 12 first connection passage; 13 second valve body; 14 second connection passage; 15 third connection passage; 16 first heat sink; 17 second heat sink; 18 short-out passage; 19 third valve body; 20 fourth valve body; 21 first valve body; 22 second throttle valve; 23 electric drive system; 24 electric heating device; 25 first intermediate heat exchanger; 26 pressure regulating valve; 27 pump body; 28 gas-liquid separator; 29 valve assembly; 30 first throttle valve; 31 electric drive system cooling passage; 32 second intermediate heat exchanger.

### DETAILED DESCRIPTION

In order to more clearly understand the purposes, features and advantages of the present disclosure, embodiments of the present disclosure will be further described below. It should be noted that the embodiments of the present disclosure and the features in the embodiments can be combined with each other without conflict.

In order to fully understand the present disclosure, many specific details are explained in the following description, but the present disclosure can also be implemented in other ways different from those described here. Obviously, the embodiments in the specification are only a part of the embodiments of the present disclosure, but not all of them.

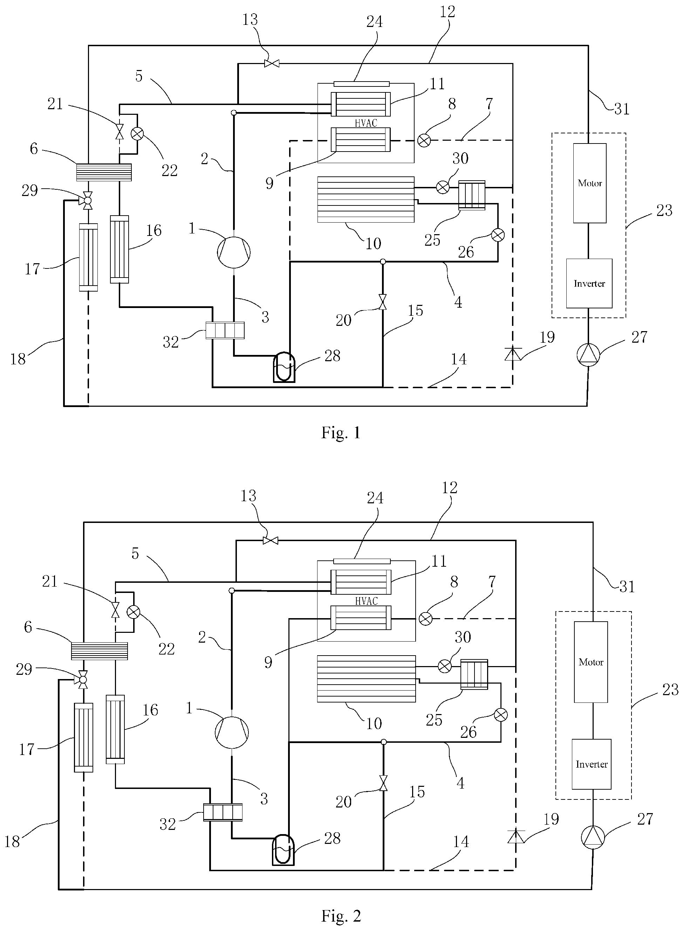

As shown in Fig. 1, a heat pump system of an electric vehicle disclosed in an embodiment of the present disclosure includes a compressor 1, a heat exchange device 6, a battery cooling passage 4 for cooling a battery, an outdoor heat exchange passage 5 configured to be arranged outside a cab and cooling a refrigerant, and an electric drive system cooling passage 31 for cooling a motor and an electronic control device, etc. The battery cooling passage 4 and the outdoor heat exchange passage 5 are connected in series or in parallel between an inlet pipe 3 of the compressor and an outlet pipe 2 of the compressor 2. When the battery cooling passage 4 and the outdoor heat exchange passage 5 are connected in series, the refrigerant pumped out by the compressor 1 first passes through the outdoor heat exchange passage 5 for cooling, and then enters the battery cooling passage 4 to reduce the pressure to form refrigeration. When the battery cooling passage 4 and the outdoor heat exchange passage 5 are connected in parallel, a part of the refrigerant pumped out by the compressor 1 flows back to the compressor 1 after passing through the outdoor heat exchange passage 5, and another part of the refrigerant flows back to the compressor 1 after passing through the battery cooling passage 4.

A first heat sink 16 is arranged on the outdoor heat exchange passage 5, a second heat sink 17 is arranged on the electric drive system cooling passage 31, and the heat exchange device 6 is connected between the outdoor heat exchange passage 5 and the electric drive system cooling passage 31 to exchange heat. In this way, when the first heat sink 16 dissipates the heat of the refrigerant in the outdoor heat exchange passage 5, part of the heat of the outdoor heat exchange passage 5 is transferred to the electric drive system cooling passage 31 through the heat exchange device 6, and then is dissipated through the second heat sink 17. Therefore, by utilizing the combined effect of the first heat sink 16 and the second heat sink 17, the temperature of the refrigerant is reduced more greatly, and the refrigerating capacity of the system is improved. Especially during the charging or fast charging of the battery, as an electric drive system 23 does not work to generate heat, the second heat sink 17 can provide a higher heat dissipation efficiency.

In some embodiments, the electric drive system cooling passage 31 is a water circulation passage, on which a pump body 27 is preferably arranged to accelerate the circulation of cooling water and improve the heat dissipation efficiency.

In some embodiments, the heat exchange device 6 is a water-cooled heat exchanger, and the water-cooled heat exchanger has a simple structure, a stable operation, and a low cost.

In some embodiments, a battery heat exchanger 10 is arranged on the battery cooling passage 4, and a first intermediate heat exchanger 25 is connected between an inlet pipe of the battery heat exchanger 10 and an outlet pipe of the battery heat exchanger 10. A temperature difference between the inlet pipe and the outlet pipe of the battery heat exchanger 10 is reduced by the first intermediate heat exchanger 25, so that the refrigerant is pre-cooled in advance before entering the battery heat exchanger 10. A first throttle valve 30 is arranged on the inlet pipe of the battery heat exchanger 10 and between the first intermediate heat exchanger 25 and the battery heat exchanger 10. A pressure regulating valve 26 is arranged on the outlet pipe of the battery heat exchanger 10 and at a downstream end of the first intermediate heat exchanger 25. By the pressure regulating valve 26 adjusting an outlet pressure of the first intermediate heat exchanger 25, combined with the throttling of the first throttle valve 30 upstream of the battery heat exchanger 10, the superheat of the steam inside the first intermediate heat exchanger 25 can be controlled, and the effective control of the cooling efficiency of the battery is achieved.

In some embodiments, an indoor heat sink 11 is arranged on an outlet pipe of the compressor 2, and is configured to dissipate part of the heat of the refrigerant into the vehicle to form heating. Moreover, while heating, the temperature of the refrigerant can also be reduced, facilitating the improvement of the cooling efficiency of the battery. In order to improve the heating speed and heating efficiency, an electric heating device 24 may be arranged beside the indoor heat sink 11 to form auxiliary heating.

In a further embodiment, a second throttle valve 22 is arranged on the outdoor heat exchange passage 5, and the second throttle valve 22 is connected in parallel with a first valve body 21. In a heating mode, the first valve body 21 may be closed, and the refrigerant flows through the second throttle valve 22. At this time, the first heat sink 16 serves as an evaporator, which absorbs external heat, thus improving the heating efficiency of the system.

In some embodiments, the heat pump system further includes an indoor refrigerating passage 7, a throttling component 8 and an indoor evaporator 9 are arranged on the indoor refrigerating passage 7, and the indoor refrigerating passage 7 is connected in parallel with the battery cooling passage 4 to form refrigeration for the indoor.

In a further embodiment, the heat pump system further includes a valve assembly 29, and a short-out passage 18 connected between an inlet pipe of the second heat sink 17 and an outlet pipe of the second heat sink 17. The valve assembly 29 is configured to selectively communicate with an outdoor heat sink or the short-out passage 18. When the short-out passage 18 is communicated with the valve assembly 29, the refrigerant of the outdoor heat exchange passage 5 does not flow through the second heat sink 17, but flows through the short-out passage 18. Since the temperature of the refrigerant in the outdoor heat exchange passage 5 decreases after the refrigerant passes through the first throttle valve 30, when the refrigerant flows through the heat exchange device 6 again subsequently, the cooling energy may be transferred to the electric drive system cooling passage 31 through the heat exchange device 6, thus forming cooling for the electric drive system 23. At this time, choosing not to communicate the second heat sink 17 may avoid an unnecessary loss of the cooling energy, thereby forming a better cooling effect on the electric drive system 23.

In some embodiments, a second intermediate heat exchanger 32 is connected between the inlet pipe 3 of the compressor and the outdoor heat exchange passage 5. The second intermediate heat exchanger 32 is configured to pre-cool the refrigerant entering the battery cooling passage 4 when the outdoor heat exchange passage 5 is connected in series with the battery cooling passage 4, thereby improving the cooling efficiency. Of course, when the outdoor heat exchange passage 5 is connected in parallel with the battery cooling passage 4, the second intermediate heat exchanger 32 may also reduce a temperature difference between the refrigerants in two passages before convergence.

In some embodiments, an upstream end of the outdoor heat exchange passage 5 is communicated with an upstream end of the battery cooling passage 4 through a first connection passage 12, and a second valve body 13 is arranged on the first connection passage 12; a downstream end of the outdoor heat exchange passage 5 is communicated with the upstream end of the battery cooling passage 4 through a second connection passage 14, and a third valve body 19 is arranged on the second connection passage 14; and the downstream end of the outdoor heat exchange passage 5 is communicated with a downstream end of the battery cooling passage 4 through a third connection passage 15, and a fourth valve body 20 is arranged on the third connection passage 15. When the second valve body 13 and the third valve body 19 are opened, and the fourth valve body 20 is closed, the battery cooling passage 4 is connected in parallel with the outdoor heat exchange passage 5; when the second valve body 13 and the third valve body 19 are closed, and the fourth valve body 20 is opened, the battery cooling passage 4 is connected in series with the outdoor heat exchange passage 5, thereby achieving the switching between the connection in series and the connection in parallel of the battery cooling passage 4 and the outdoor heat exchange passage 5.

The third valve body 19 is preferably a one-way valve, which conducts in a direction pointing towards the downstream end of the battery cooling passage 4. The one-way valve does not require to be controlled and has a simple structure.

In some embodiments, a gas-liquid separator 28 is arranged on the inlet pipe 3 of the compressor for separation and reflux of the liquid in the refrigerant of the compressor 1, avoiding the liquid hammer or dry friction of the compressor 1.

Another aspect of the present disclosure discloses an electric vehicle, including the heat pump system of the electric vehicle as described above.

The heat pump system of the electric vehicle may at least achieve the following modes.

### Standard heating mode

As shown in Fig. 1, in this mode, the first valve body 21, the third valve body 19, and the throttling component 8 are closed, the valve assembly 29 selects to communicate with the short-out passage 18, and the remaining passages are opened. The high-temperature and high-pressure refrigerant pumped out by the compressor 1 enters the indoor heat sink 11 through the outlet pipe 2 of the compressor, and a fan corresponding to the indoor heat sink 11 is turned on to blow the hot air into a vehicle compartment. After flowing through the indoor heat sink 11, a part of the refrigerant flows through the first connection passage 12 to the battery cooling passage 4, and another part of the refrigerant flows to the outdoor heat exchange passage 5. On the one hand, the refrigerant flowing to the battery cooling passage 4 first flows to the first intermediate heat exchanger 25, then becomes into a low-temperature and low-pressure state through the throttling of the first throttle valve 30, and then forms refrigeration in the battery heat exchanger 10; the refrigerant flowing out from the battery heat exchanger 10 passes through the first intermediate heat exchanger 25 again and is regulated and controlled by the downstream pressure regulating valve 26 to avoid the generation of the superheated steam, realizing the control of the cooling efficiency of the battery in cooperation with the first throttle valve 30. On the other hand, the refrigerant flowing to the outdoor heat exchange passage 5 first becomes into a low-temperature and low-pressure state through the throttling of the first throttle valve 30, and thus part of the cooling energy is transferred to the electric drive system cooling passage 31 through the downstream heat exchange device 6, forming cooling for the electric drive system 23. At this time, using the short-out passage 18 to short out the second heat sink 17 is to avoid the loss of the cooling energy. The refrigerant itself is heated while passing through the heat exchange device 6, so that the system temperature of the refrigerant can be increased, thus facilitating the improvement of the heating efficiency, and achieving the waste heat utilization of the electric drive system 23. The refrigerant enters the first heat sink 16 after flowing through the heat exchange device 6. At this time, the first heat sink 16 serves as an evaporator, which absorbs heat from the environment and increases the system temperature of the refrigerant. The refrigerant flowing through the first heat sink 16 passes through the third valve body 19 and then flows through the third connection passage 15 to converge with the refrigerant in the battery cooling passage 4, and the converged refrigerant flows to the inlet pipe 3 of the compressor.

### Heating and dehumidification mode

As shown in Fig. 2, a difference between the heating and dehumidification mode and the standard heating mode is that the throttling component 8 is opened at different times. During the heating operation of the system, in order to reduce the humidity of the air, the throttling component 8 may be opened to make the indoor evaporator 9 form a cold body and be arranged in an air output direction of the indoor heat sink 11, and part of moisture in the air flowing across a surface of the indoor evaporator 9 is cooled and liquefied, thereby reducing the humidity of the air after a period of circulation.

### Battery refrigerating and fast charging mode

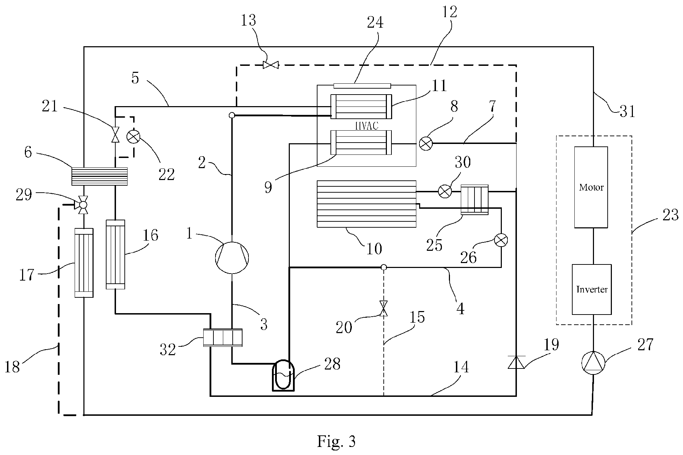

As shown in Fig. 3, a large amount of heat will be generated during the fast charging of the battery, and thus the stronger refrigeration is required. In order to make the battery heat exchanger 10 produce a lower cooling energy, compared to the standard heating mode, the outdoor heat exchange passage 5 and the battery cooling passage 4 are connected in series, that is, the second valve body 13 and the fourth valve body 20 are closed, the first valve body 21 is opened, the first throttle valve 30 is closed, and the valve assembly 29 selects to communicate with the second heat sink 17. The indoor heat sink 11 and the indoor evaporator 9 may be selected for operation or not according to the situation. Compared to the standard heating mode, all the refrigerant is directed to an outdoor heat dissipation circuit, and the first heat sink 16 and the second heat sink 17 work simultaneously through the heat exchange device 6, thus dissipating the heat of the refrigerant. Subsequently, the refrigerant flows through the second connection passage 14 to the battery cooling passage 4. Due to a lower initial temperature of the refrigerant entering the battery cooling passage 4, a stronger refrigeration effect can be formed.

It can be seen from the above that the whole heat pump system of the electric vehicle according to the embodiment may be optimized and combined in various modes to achieve the optimal energy efficiency and comprehensive waste heat utilization of the system.

The present disclosure further provides an electric vehicle, including the heat pump system of the electric vehicle as described above. Due to the high battery refrigerating and heating efficiency and the strong indoor heating efficiency of the heat pump system according to the present disclosure, the electric vehicle may be more energy-efficient and more comfortable.

It should be noted that in the present disclosure, relative terms such as "first" and "second" are only used to distinguish an entity or operation from another entity or operation, and do not necessarily require or imply any such actual relationship or order between these entities or operations. Furthermore, the terms "include", "comprise" or any other variation thereof are intended to cover non-exclusive inclusions, so that a process, a method, an article, or a device including a series of elements includes not only those elements, but also other elements that are not expressly listed, or also includes elements inherent in such process, method, article, or device. Without further limitation, an element defined by the phrase "including a ..." does not exclude the presence of additional identical elements in the process, method, article or device including the element.

The above description is only the specific embodiment of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to those embodiments described herein, but conforms to the widest scope consistent with the principles and novel features disclosed herein.

## Claims

1. A heat pump system of an electric vehicle, comprising a compressor (1), a battery cooling passage (4), an outdoor heat exchange passage (5), an electric drive system (23) cooling passage and a heat exchange device (6), wherein the battery cooling passage (4) and the outdoor heat exchange passage (5) are connected in series or in parallel between an inlet pipe (3) of the compressor (1) and an outlet pipe (2) of the compressor, a first heat sink (16) is arranged on the outdoor heat exchange passage (5), a second heat sink (17) is arranged on the electric drive system (23) cooling passage, and the heat exchange device (6) is connected between the outdoor heat exchange passage (5) and the electric drive system cooling passage (31) to exchange heat.

2. The heat pump system of the electric vehicle according to claim 1, wherein a battery heat exchanger (10) is arranged on the battery cooling passage (4), and a first intermediate heat exchanger (25) is connected between an inlet pipe of the battery heat exchanger (10) and an outlet pipe of the battery heat exchanger (10); a first throttle valve (30) is arranged on the inlet pipe of the battery heat exchanger (10) and between the first intermediate heat exchanger (25) and the battery heat exchanger (10); and a pressure regulating valve (26) is arranged on the outlet pipe of the battery heat exchanger (10) and at a downstream end of the first intermediate heat exchanger (25).

3. The heat pump system of the electric vehicle according to claim 1 or 2, wherein an indoor heat sink (11) is arranged on the outlet pipe (2) of the compressor (1).

4. The heat pump system of the electric vehicle according to any one of claims 1 to 3, further comprising an indoor refrigerating passage (7) connected in parallel with the battery cooling passage (4).

5. The heat pump system of the electric vehicle according to any one of claims 1 to 4, wherein a second intermediate heat exchanger (32) is connected between the inlet pipe (3) of the compressor (1) and the outdoor heat exchange passage (5).

6. The heat pump system of the electric vehicle according to any one of claims 1 to 5, wherein a first throttle valve (30) is arranged on the outdoor heat exchange passage (5), and the first throttle valve (30) is connected in parallel with a first valve body (21).

7. The heat pump system of the electric vehicle according to claim 6, further comprising a valve assembly (29), and a short-out passage (18) connected between an inlet pipe of the second heat sink (17) and an outlet pipe of the second heat sink (17), wherein the valve assembly (29) is configured to selectively communicate with the second heat sink (17) or the short-out passage (18).

8. The heat pump system of the electric vehicle according to any one of claims 1 to 7, wherein an upstream end of the outdoor heat exchange passage (5) is communicated with an upstream end of the battery cooling passage (4) through a first connection passage (12), and a second valve body (13) is arranged on the first connection passage (12); a downstream end of the outdoor heat exchange passage (5) is communicated with the upstream end of the battery cooling passage (4) through a second connection passage (14), and a third valve body (19) is arranged on the second connection passage (14); and the downstream end of the outdoor heat exchange passage (5) is communicated with a downstream end of the battery cooling passage (4) through a third connection passage (15), and a fourth valve body (20) is arranged on the third connection passage (15).

9. The heat pump system of the electric vehicle according to claim 8, wherein the third valve body (19) is a one-way valve conducting in a direction pointing towards the downstream end of the battery cooling passage (4).

10. An electric vehicle, comprising a heat pump system of an electric vehicle according to any one of claims 1 to 9.
